# EUROPEAN PATENT APPLICATION

(11) **EP 4 254 618 A1**
(43) Date of publication of application: **04.10.2023**
(21) Application number: 22818174.9
(22) Date of filing: 11.10.2022
(51) Int. Cl.: H01M 50/152, H01M 50/188, H01M 50/184, H01M 50/179

(54) **BATTERY COVER PLATE ASSEMBLY AND CYLINDRICAL BATTERY**

(30) Priority: 10.02.2022 CN 202220271673 U
(71) Applicant: Eve Power Co., Ltd., Jingmen, Hubei 448000 (CN)
(72) Inventor: ZHAO, Fenfen, Jingmen, Hubei 448000 (CN); ZHAO, He, Jingmen, Hubei 448000 (CN); YANG, Cheng, Jingmen, Hubei 448000 (CN); XU, Yuebin, Jingmen, Hubei 448000 (CN); HE, Wei, Jingmen, Hubei 448000 (CN)
(74) Representative: De Arpe Tejero, Manuel
(86) International application number: PCT/CN2022/124499
(87) International publication number: WO 2023/151295

(57) **Abstract**

The present application provides a battery cover assembly and a cylindrical battery, the battery cover assembly includesan electrode post, a top cover and a sealing member. The electrode postincludes a base plate portion, a boss portion on a side of the base plate portion, and a post portion on theboss portion. The top cover defines an assembly hole, the post portionextends throughthe assembly hole; the sealing member sleeves an outside of the post portion and abuts against theboss portion, the post portion and the top cover.

## Description

The present application claims the priority of the Chinese patent application No. 202220271673.0, filed on February 10, 2022, in the China National Intellectual Property Administration, and the entire contents of which are hereby incorporated by reference in their entireties.

### TECHNICAL FIELD

The present disclosure relates to the field of cylindrical batteries, and in particular to a battery cover assembly and a cylindrical battery.

### BACKGROUND

At present, cylindrical batteries are widely used since they have simple structures and other advantages. A cylindrical battery may include a battery cover assembly, which includes anelectrode post, a current collecting plate, a lower plastic, and a sealing ring, and so on.

In the related art, connection between the electrode post, the current collecting plate, the lower plastic and the sealing ring maybe as follows: the electrode post and the current collecting plate are fixed by ultrasonic welding, the current collecting plate contacts the lower plastic, and an upper surface of the lower plastic is compressed by and assembled with the sealing ring.

However, the above connection manner of the battery cover assembly may cause battery liquid to leak out from a battery core. A specific defect mechanism is as follows: after the current collecting plateis ultrasonically welded to the electrode post, a surface of the current collecting platemay not beflat, such that an electrolyte may penetrate into the electrode post along a gap between the current collecting plate and an upper plastic, resulting in the battery cover assembly having a risk of electrolyte leakage.

### SUMMARY OF THE DISCLOSURE

The present disclosure provides a battery cover assembly and a cylindrical battery, which may reduce a possibility of leaking the electrolyte, have a simple structure, and are highly reliable.

According to a first aspect, the present disclosure provides a battery cover assembly, including:
an electrode post, including a base plate portion, a boss portion arranged on a side of the base plate portion, and a post portion arranged on the boss portion;
a top cover, defining an assembly hole, wherein the post portion extends through the assembly hole;
a sealing member, sleeving an outside of the post portion and abuts against the boss portion, the post portion, and the top cover.

According to a second aspect,the present disclosure provides a cylindrical battery, including the battery cover assembly as described in the above.

### BRIEF DESCRIPTION OF THE DRAWINGS

FIG. 1 is a perspective view of a battery cover assembly according to an embodiment of the present disclosure.
FIG. 2 is an enlarged view of a portion A shown in FIG. 1.
FIG. 3 is a front view of a battery cover assembly according to an embodiment of the present disclosure.
FIG. 4 is a cross-sectional view of the battery cover assembly shown in FIG. 3, taken along a line B-B.
FIG. 5 is an enlarged view of a portion C shown in FIG. 4.
FIG. 6 is an enlarged view of a portion D shown in FIG. 4.
FIG. 7 is a structural schematic view of a sealing ring according to an embodiment of the present disclosure.

In the drawings:
1, electrode post; 11, base plate portion; 12, boss portion; 13, postportion; 131, position limiting portion; 2, top cover; 21, assembly hole; 22, shallow slot; 3, sealing member; 31, first sealing portion; 32, second sealing portion; 4, current collecting plate; 5, lower plastic; 51, through hole; 52, flange; 6, upper plastic; 61, protrusion; 62, anti-rotationboss; 63, groove; 7, terminal; 71,position limiting slot; 72, protrusion structure.

### SUMMARY OF THE DISCLOSURE

In the description of the present disclosure, unless otherwise expressively specified and limited,terms "inter-connected", "connected", "fixed"shall be interpreted broadly, such as being interpreted as fixed connection, removable connection, beingconfigured as an integral one-piece structure, mechanical connection, electrical connection, direct connection, indirect connection through an intermediate medium, inner sides of two elements being communicated, or interaction between two elements. For any ordinary skilled person in the art, a specific meaning of the above terms in the context of the present disclosure shall be understood based on actual cases.

In thepresent disclosure,unless otherwise expressively specified and limited, a first feature "above" or "below"a second feature may include direct contact between the first feature and the second feature, or the first feature indirectly contactingthe second feature through another feature disposed therebetween. Further, the first feature being "above", "on" and "on top of" the second feature includes the first feature being directly above and diagonally above the second feature; or simply indicates that the first feature is horizontally higher than the second feature. The first feature being "below", "under" and "beneath" the second feature includes the first feature being directly below and diagonally below the second feature, or simply indicates that the first feature is horizontally lower than the second feature.

In the description of the present disclosure, the terms "up", "down", "right", and other orientation or positional relationship represent an orientation or positional relationship as shown in the accompanying drawings. The orientation or positional relationship aims to provide a simple description and to simplify an operation, but does notindicate or imply that a device or an element must have a particular orientation or must be configuredas and operated in a particular orientation. Therefore, orientation or positional relationship shall not to be interpreted as limiting the present disclosure.In addition, terms "first" and "second" are used for descriptive distinction only and have no special meaning.

The present disclosure provides a battery cover assembly, which may reduce a possibility of electrolyte leakage and have a simple structure, and is highly reliable.

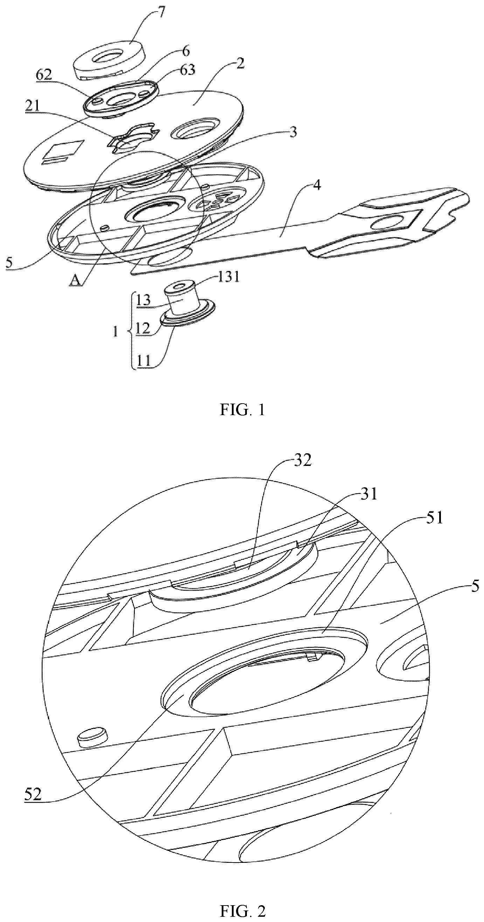

As shown in FIG. 1, the battery cover assembly may include an electrode post 1, a top cover 2 and a sealing member 3.

The electrode post1 may include a base plate portion 11, a boss portion 12 arranged on a side of the base plate portion 11, and a post portion 13 arranged on the boss portion 12. That is, the base plate portion 11, the boss portion 12 and the post portion 13 are connected in sequence. In the related art, the electrode post1 may be configured to be screw-shaped. Forthe electrode post 1 provided in the present embodiment, aboss is arranged on a nut of the screw-shaped electrode post provided in the related art. In some embodiments, as shown in FIG. 1, a cross section of the base plate section 11, a cross section of the boss portion 12, and a cross section of the post portion 13 may be circular. In other embodiments, the cross section of the base plate section 11, the cross section of the boss portion 12, and the cross section of the post portion 13 may besquared, triangular, and so on.A cross-sectional area of the boss portion 12 is less than a cross-sectional area of the base plate portion 11, such that a boss, which is protruded relative to the base plate portion 11, is formed. The cross-sectional area of the boss portion 12 is greater than a cross-sectional area of the post portion 13.For example, the electrode post 1 may be configured as an integral one-piece structure. That is, the base plate portion 11, the boss portion 12 and the post portion 13 may be formed by performing one manufacturing process.

The above-mentioned top cover 2 may define an assembly hole 21, and the post portion 13 extends through the assembly hole 21. The boss portion12 and the base plateportion 11 are disposed on a side of the top cover 2, such as on a bottom side of the top cover 2.The sealing member 3 is configured to seal a gap between the top cover 2 and the electrode post 1. For example, the sealing member 3 may sleeve an outside of the post portion 13, and the sealing member 3 abutstightly against the boss portion 12, the post portion 13, and the top cover 2, such that the gap between the boss portion 12 and the top cover 2 may be sealed with each other by the sealing member 3, and the post portion 13 and the top cover 2 may be sealed with each other by the sealing member 3. To be noted that the sealing member 3 in the present embodiment may be elastic, such that the sealing member 3 may be in fit interference between the top cover 2 and the electrode post 1, providing a better sealing effect. Exemplarily, the sealing member 3 may be made of an elastic material such as rubber, silicone, and so on.

For the battery cover assembly provided in the present embodiment, the electrode post 1 may havetheboss portion 12 and the post portion 13, and the sealing member 3 may directly contact the boss portion 12 and the post portion 13. Since a surface of the boss portion 12 and a surface the post portion 13 may be smoother than a plastic in the related art, the sealing member 3 may provide an improved sealing effect between the top cover 2 and the boss portion12 and between the top cover 2 and the post portion 13. The electrolyte is less likely to flow through the gap between the sealing member 3 and the boss portion12 to reach the post portion 13, the possibility of electrolyte leakage may be reduced, the structure of the battery cover assembly may be simple, and the battery cover assembly may be highly reliable.

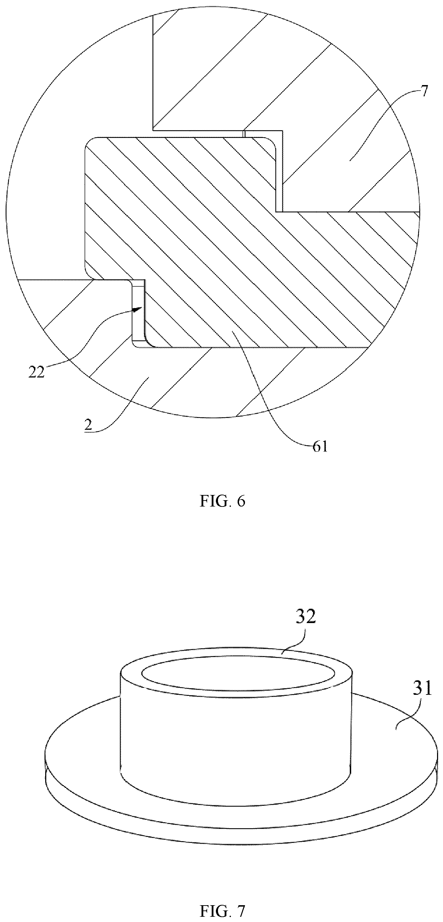

For example, as shown in FIG. 2 or FIG. 7, the sealing member 3 may include a first sealing portion 31 and a second sealing portion 32, which may extend across and are connected with each other. The first sealing portion 31 is disposed between the boss portion 12 and the top cover 2, and abuts tightly against the boss portion 12 and a bottom surface of the top cover 2 to seal the gap between the boss portion 12 and the top cover 2. The second sealing portion 32 is received in the assembly hole 21 and abuts tightly against a wall of the assembly hole 21 and the post portion 13 to seal the gap between the top cover 2 and the post portion 13. In this way, a multi-sealing structure with a better sealing effect is achieved. In some embodiments, as shown in FIG. 7, the first sealing portion 31 is perpendicular to and connected with the second sealing portion 3, such that a vertical cross section of the sealing member 3 may be L-shaped. The L-shaped sealing member 3 and the electrode post 1 having the boss portion 12 may cooperate with each other to reduce the risk of electrolyte leakage. To be noted that the sealing member 3 in the present embodiment may beconfigured as the integrally formedstructure, preventing the sealing member 3 from reducing sealing effect due to its connection joint.

In the present embodiment, as shown in FIG. 1, the battery cover assembly may further include a current collecting plate 4, which is arranged on a side of the top cover 2 and is welded to the base plate portion 11. In some embodiments, the current collecting plate 4 is welded to the base plate portion 11 by ultrasonic welding.

For example, the battery cover assembly may further include a lower plastic 5. The lower plastic 5 is disposed between the top cover 2 and the current collecting plate 4. The boss portion12 and the post portion 13 may extend through the lower plastic 5. The base plate portion 11 is disposed on a side of the lower plastic 5 away from the top cover 2. The sealing member 3 abuts tightly against the lower plastic 5. In this way, the sealing member 3 and the lower plastic 5 may cooperate with each other to prevent the electrolyte from flowing to the post portion 13.

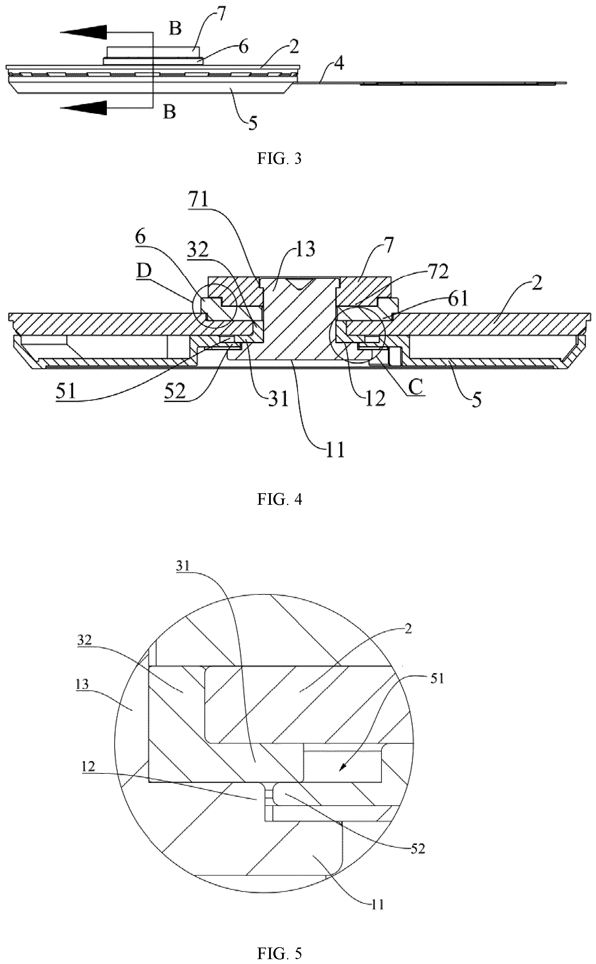

For example, as shown in FIG. 4 and FIG. 5, the lower plastic 5 may define a throughhole 51 extending through the lower plastic 5 in a thickness direction of the top cover 2.A wall of the throughhole 51 is arranged with a flange 52. In some embodiments, the flange 52extends radially along the throughhole 51. For example, the flange 52 may be configured as a loop and may extendalong a circumference of the wall of the throughhole 51.The flange 52 may define a receiving groove, or the flange 52 and the wall of the through hole 51 may cooperatively define the receiving groove. The boss portion 12 is received in the receiving groove.The first sealing portion 31 of the sealing member 3 is received in the through hole 51 and may abut against a surface of the boss portion 12 near the top cover 2 and abut against a surface of the flange 52 near the top cover 2.In some embodiments, the first sealing portion 31 of the sealing member 3 may seal a gap between the boss portion 12 and the flange 52 to prevent the electrolyte from flowing through the gap between the boss portion 12 and the flange 52 to reach the post portion 13.

In some embodiments, in order to improve the sealing effect,the first sealing portion 31 of the sealing member 3 may abut tightly against the wall of the through hole 51 and the post portion 13, forming a multi-layer sealing structure.Furthermore, the flange 52 may abut against the boss portion 12 to reduce the possibility of the electrolyte flowing between the flange 52 and the boss portion12.

In the present embodiment, as shown in FIG. 5, the first sealing portion 31 abuts tightly against a top surface of the flange 52 (i.e., a surface of the flange 52 near or facing the surface of the top cover 2), such that the top surface of the flange 52 and the bottom surface of the top cover 2 cooperate with each other to tightly compress the first sealing portion 31. That is, a distance between the top surface of the flange 52 and the bottom surface of the top cover 2 is less than a thickness of the first sealing portion 31to avoid leakage of electrolyte taken in via the gap between the lower plastic 5 and the electrode post 1, such that the sealing effect of the first sealing portion 31 may be improved. To be noted that, as shown in FIG. 5, the top surface of the flange 52 is co-planar with the top surface of the boss portion 12 (i.e., the surface of the boss portion 12 near or facing the top cover 2). In this case, the bottom surface of the first sealing portion 31 may abut tightly against the top surface of the flange 52 and the top surface of the boss portion 12 at the same time, and the first sealing portion 31 may not be deformed, and a large gap may not be defined.

For example, as shown in FIG. 1, the battery cover assembly may further include an upper plastic 6, which sleeves the outside of the post portion 13 and is disposed on another side of the top cover 2. For example, the upper plastic 6 and the lower plastic 5 may be disposed on two sides of the top cover 2 respectively. The upper plastic 6 may abut tightly against the post portion 13 and the top cover 2to assist in sealing the gap between the top cover 2 and the post portion 13.

For example, as shown in FIG. 6, the top cover 2 may define a shallow slot 22. A side of the upper plastic 6facing the top cover 2 is arranged with a protrusion 61. Theprotrusion 61 may be received in the shallow slot 22 may abut tightly against a side wall of the post portion 13 and a wall of the shallow slot 22(the gap between the protrusion 61 and the shallow slot 22 in FIG. 6 is for illustration only). In this way, the top cover 2 may limit a position of the upper plastic 6, and the upper plastic 6 may provide an improved sealing effect on the gap between the top cover 2 and the post portion 13.

For example, as shown in FIG. 1 and FIG. 4, the battery cover assembly may further include a terminal 7, which is fixedly connected to an end of the post portion 13. The upper plastic 6 is disposed between the top cover 2 and the terminal 7 and may abut tightly against the terminal 7. In some embodiments, as shown in FIG. 4, the post portion 13 may extend through the terminal 7.

For example, as shown in FIG. 4, the top surface of the terminal 7 may define a position limiting slot 71. As shown in FIG. 1, an end portion of the post portion 13 has a position limiting portion 131 which may engage with the position limiting slot 71. The position limiting portion 131 is received in the position limiting slot 71 to limit a position of the terminal 7 through the post portion 13.To be noted that the position limiting portion 131 is a protrusion structure arranged on the side wall of the post portion 13. Further, the position limiting portion 131 and the boss portion 12 may cooperatively limit positions of the terminal 7, the upper plastic 6 and the top cover 2 in an axial direction of the post portion 13, such that the battery cover assembly may be more structurally compact.

For example, as shown in FIG. 1, atop surface of the top plastic 6away from the top cover 2 may define a groove 63. Further, as shown in FIG. 4, the terminal 7 may have a protrusion structure 72 that protrudes towards the top plastic 6.The protrusion structure 72 may bereceived in the groove 63, and a position of the protrusion structure 72 may be limited by the groove 63, such that the terminal 7 may be prevented from moving in the radial direction of the post portion 13.

In the present embodiment, one of the upper plastic 6 and the terminal 7 is arranged with an anti-rotationboss 62, and the other one of the upper plastic 6 and the terminal 7 may define an anti-rotationslot that is engaged with the anti-rotationboss 62. The anti-rotationboss 62 may be received in the anti-rotation slot to prevent the terminal 7 from rotating relative to the upper plastic 6. FIG. 1 is a schematic view of the anti-rotation boss 62 being arranged on the upper plastic 6 and the anti-rotation slot being defined inthe terminal 7.In some embodiments,a plurality of anti-rotationbosses 62 may be arranged, and a plurality of anti-rotation slots may be defined, each of the plurality of anti-rotation slots may receive one of the plurality of anti-rotationbosses 62. For example, the anti-rotationboss 62 may be cylindrical, prismatic, and so on, which will not be limited herein.

In the related art, the sealing ringmay directly contact the lower plastic. While manufacturing the battery cover assembly, the sealing ring may be compressed in a vertical direction to achieve the sealing effect. However, a side of the sealing ringmay not be significantly compressed, resulting in the battery cover assembly having the risk of electrolyte leakage. By contrast, in the present embodiment,the top cover 2 and the post portion 13 may compressthe second sealing portion 32in the horizontal direction, allowing a side of the sealing member 3 to receive a compression force, and reducing the risk of electrolyte leakageof the battery cover assembly.

The battery cover assembly provided inthe present embodiment may have a simple structure, may be easily manufactured and achieved, and may have a low cost, allowing a large number of battery cover assemblies to be manufactured in batches.

The present embodiment may also provide a cylindrical battery, including the battery cover assembly as described in the above. The cylindrical battery provided in the present embodiment may have a low risk of electrolyte leakage and may be highly reliable.

## Claims

1. A battery cover assembly, comprising:
an electrode post (1), comprising a base plate portion (11), a boss portion (12) arranged on a side of the base plate portion (11), and a post portion (13) arranged on theboss portion (12);
a top cover (2), defining an assembly hole (21), wherein the post portion (13) extends through the assembly hole (21);
a sealing member (3), sleeving an outside of the post portion (13) and abuts against theboss portion (12), the post portion (13), and the top cover (2).

2. The battery cover assemblyaccording to claim 1, wherein, the sealing member (3) comprises a first sealing portion (31) and a second sealing portion (32); the first sealing portion (31) and the second sealing portion (32)extend across and are connected with each other;
the first sealing portion (31) is disposed between theboss portion (12) and the top cover (2); and
the second sealing portion (32) is received in the assembly hole (21) and abuts against a wall of the assembly hole (21) and the post portion (13).

3. The battery cover assemblyaccording to claim 1 or claim 2, further comprising acurrent collecting plate(4), wherein the current collecting plate(4) is arranged on afirst side of the top cover (2) and is welded to the base plate portion(11).

4. The battery cover assemblyaccording toclaim 3, further comprising a lower plastic (5), disposed between the top cover (2) and the current collecting plate(4), wherein the boss portion (12) and the post portion (13)extend through the lower plastic (5), and the sealing member(3)abuts against the lower plastic (5).

5. The battery cover assemblyaccording toclaim 4, wherein the lower plastic (5)defines a throughhole (51), a wall of the throughhole (51) is arranged with a flange (52);
the boss portion(12) is received in a receiving groove defined in the flange (52);
the sealing member (3) is received in the through hole(51) and abuts against a surface of the boss portion(12) near the top cover (2) and abut against a surface of the flange (52) near the top cover (2).

6. The battery cover assembly according to claim 5, wherein the sealing member(3)abuts against the wall of the through hole (51) and the post portion(13), and the flange (52)abuts against the boss portion (12).

7. The battery cover assembly according to claim 5, wherein the sealing member(3) sealsa gap between the boss portion(12) and the flange (52).

8. The battery cover assembly according to claim 1 or claim 2, further comprising an upper plastic (6), sleeving the outside of the post portion(13) and disposed on a second side of the top cover (2), wherein the upper plastic (6)abuts against the post portion(13) and the top cover (2).

9. The battery cover assembly according to claim 8, wherein the top cover (2)defines a shallow slot(22), the upper plastic 6 is arranged with a protrusion(61), theprotrusion(61) is received in the shallow slot(22) and abuts against the post portion(13) and a wall of the shallow slot(22).

10. The battery cover assembly according to claim 8, further comprising a terminal (7), fixedly connected to an end portion of the post portion (13), wherein the upper plastic (6) abuts against the terminal (7).

11. The battery cover assembly according to claim 10, wherein the terminal (7)defines a position limiting slot(71), an end portion of the post portion(13) has a position limiting portion(131) which engages with the position limiting slot(71), a position of the position limiting portion(131) is limited inside the position limiting slot(71).

12. The battery cover assembly according to claim 10, wherein the upper plastic (6) is arranged with an anti-rotationboss(62), the terminal (7) defines an anti-rotationslot that is engaged with the anti-rotationboss(62), the anti-rotationboss(62) is received in the anti-rotation slot; or
the terminal (7) is arranged with theanti-rotationboss(62), the upper plastic (6) defines theanti-rotationslot that is engaged with the anti-rotationboss(62), the anti-rotationboss(62) is received in the anti-rotation slot.

13. The battery cover assembly according to claim 1, wherein the electrode post (1) is configured as an integrally formed structure.

14. A cylindrical battery, comprising the battery cover assemblyaccording to any one of claims 1 to 13.
